# EUROPEAN PATENT APPLICATION

(11) **EP 1 518 834 A1**
(43) Date of publication of application: **30.03.2005**
(21) Application number: 04023069.0
(22) Date of filing: 28.09.2004
(51) Int. Cl.: C03B 37/029, C03B 37/025

(54) **Method and apparatus for producing optical fiber**

(30) Priority: 29.09.2003 JP 2003338066
(71) Applicant: Sumitomo Electric Industries, Ltd., Osaka-shi, Osaka 541-0041 (JP)
(72) Inventor: Yamashita, Taiichiro, 1 Taya-cho Sakae Yokohama-shi Kanagawa (JP); Adachi, Toru, 1 Taya-cho Sakae Yokohama-shi Kanagawa (JP); Kuwahara, Kazuya, 1 Taya-cho Sakae Yokohama-shi Kanagawa (JP); Shimoda, Hiroki, 1 Taya-cho Sakae Yokohama-shi Kanagawa (JP)
(74) Representative: HOFFMANN - EITLE

(57) **Abstract**

A method produces an optical fiber without requiring a vertically large space, and an apparatus implements the method. The method produces an optical fiber by heating a lower-end portion of an optical fiber preform with a heating element so that the optical fiber preform can be drawn. In this method, the optical fiber preform is drawn by moving a heat-generating portion of the heating element from the lower-end portion toward an upper-end portion of the optical fiber preform. The apparatus produces an optical fiber by heating a lower-end portion of an optical fiber preform with a heating element so that the optical fiber preform can be drawn. The apparatus comprises a mechanism for moving a heat-generating portion of the heating element from the lower-end portion toward an upper-end portion of the optical fiber preform.

## Description

### BACKGROUND OF THE INVENTION

### Field of the Invention

The present invention relates to a method of producing an optical fiber by heating and drawing an optical fiber preform and an apparatus for implementing the method.

### Description of the Background Art

The published Japanese patent application *Tokukaihei* 11-139843 has described a method of producing an optical fiber by drawing an optical fiber preform. According to the method, an optical fiber preform is heated in a drawing furnace and moved downward with a preform-feeding unit for the drawing operation. This is an ordinary method of producing an optical fiber. In the above-described method, first, the optical fiber preform is lowered to be fed into the drawing furnace to start the drawing. Then, the preform is lowered further as the drawing proceeds. Consequently, the total amount of the movement of the preform is increased. As a result, the drawing of the optical fiber requires a vertically large space.

### SUMMARY OF THE INVENTION

An object of the present invention is to offer a method of producing an optical fiber without requiring a vertically large space and an apparatus for implementing the method.

According to the present invention, the foregoing object is attained by offering the following method of producing an optical fiber by heating a lower-end portion of an optical fiber preform with a heating element so that the optical fiber preform can be drawn. In this production method, the optical fiber preform is drawn by moving a heat-generating portion of the heating element from the lower-end portion toward an upper-end portion of the optical fiber preform.

The heating element may be fixed to a furnace body that surrounds the heating element so that the heat-generating portion can be moved by moving the furnace body. In this case, the heating element may be a susceptor that is heated by high-frequency induction. A diameter monitor may be fixed to the furnace body so that the diameter monitor, which accordingly moves together with the furnace body, can measure the diameter of the optical fiber at a practically constant distance from a neck-down portion of the optical fiber preform.

The method may have the following features:
(a) the heating element is a susceptor that is heated by high-frequency induction;
(b) a coil for generating a high-frequency electromagnetic field is placed around the susceptor; and
(c) the coil is moved in relation to the susceptor to move a heat-generating portion of the susceptor.

The method may have the following features:
(a) the heating element is a susceptor that is heated by high-frequency induction;
(b) a plurality of coils for generating a high-frequency electromagnetic field are vertically aligned around the susceptor; and
(c) the supplying of an electric current is switched from one of the coils to another to move a heat-generating portion of the susceptor.

A preform-holding rod having practically the same diameter as that of the optical fiber preform may be jointed to the top of the optical fiber preform. Before moving the furnace body, the upper portion of the optical fiber preform may be covered with an expansion member linked to the top portion of the furnace body. An optical fiber preform may be drawn by moving the heating element or the optical fiber preform so that the center axis of the heating element and that of the optical fiber preform can be coincident with each other.

According to one aspect of the present invention, the present invention offers an apparatus for producing an optical fiber by heating a lower-end portion of an optical fiber preform with a heating element so that the optical fiber preform can be drawn. The apparatus comprises a moving mechanism for moving a heat-generating portion of the heating element from the lower-end portion toward an upper-end portion of the optical fiber preform.

The apparatus may have the following features:
(a) the heating element is fixed to a furnace body that surrounds the heating element; and
(b) the moving mechanism moves the furnace body.

The apparatus may have the following features:
(a) the heating element is a susceptor that is heated by high-frequency induction;
(b) a coil for generating a high-frequency electromagnetic field is placed around the susceptor; and
(c) the moving mechanism moves the coil in relation to the susceptor.

The apparatus may have the following features:
(a) the heating element is a susceptor that is heated by high-frequency induction;
(b) a plurality of coils for generating a high-frequency electromagnetic field are vertically aligned around the susceptor; and
(c) the moving mechanism adjusts electric currents to be supplied to the coils.

Advantages of the present invention will become apparent from the following detailed description, which illustrates the best mode contemplated to carry out the invention. The invention can also be carried out by different embodiments, and its several details can be modified in various respects, all without departing from the invention. Accordingly, the accompanying drawing and the following description are illustrative in nature, not restrictive.

### BRIEF DESCRIPTION OF THE DRAWING

The present invention is illustrated to show examples, not to show limitations, in the figures of the accompanying drawing. In the drawing, the same reference numeral and sign refer to a similar element.

In the drawing:
Figure 1 is a vertical cross section of the first embodiment of the apparatus of the present invention for producing an optical fiber.
Figure 2 is a plan view of the optical fiber-producing apparatus of the first embodiment including its partial cross section.
Figure 3 is a schematic diagram showing the optical fiber-producing apparatus of the first embodiment when the drawing operation has proceeded to a certain extent.
Figure 4 is a schematic diagram explaining a method of producing an optical fiber by using a conventional optical fiber-producing apparatus.
Figure 5 is a vertical cross section of the second embodiment of the apparatus of the present invention for producing an optical fiber.
Figure 6 is a view showing the VI - VI cross section of the optical fiber-producing apparatus of the second embodiment.
Figure 7 is a schematic diagram explaining a method of producing an optical fiber by using the optical fiber-producing apparatus of the second embodiment.
Figure 8 is a vertical cross section of the third embodiment of the apparatus of the present invention for producing an optical fiber.
Figures 9A and 9B are schematic diagrams explaining a method of sealing an opening at the top of the furnace body of the optical fiber-producing apparatus of the third embodiment.
Figure 10 is a vertical cross section of the fourth embodiment of the apparatus of the present invention for producing an optical fiber.
Figure 11 is a schematic diagram showing an example of a method of supplying electric currents to the individual coils of the optical fiber-producing apparatus of the fourth embodiment.
Figure 12 is a vertical cross section of the fifth embodiment of the apparatus of the present invention for producing an optical fiber.
Figure 13 is a vertical cross section of the sixth embodiment of the apparatus of the present invention for producing an optical fiber.
Figure 14 is a diagram showing the optical fiber-producing apparatus of the sixth embodiment when the drawing operation has proceeded to a certain extent.
Figure 15 is a vertical cross section of the seventh embodiment of the apparatus of the present invention for producing an optical fiber.
Figure 16 is a view showing the XVI - XVI cross section of the optical fiber-producing apparatus of the seventh embodiment.
Figure 17 is a vertical cross section of the eighth embodiment of the apparatus of the present invention for producing an optical fiber.
Figure 18 is a vertical cross section of the ninth embodiment of the apparatus of the present invention for producing an optical fiber.

### DETAILED DESCRIPTION OF THE INVENTION

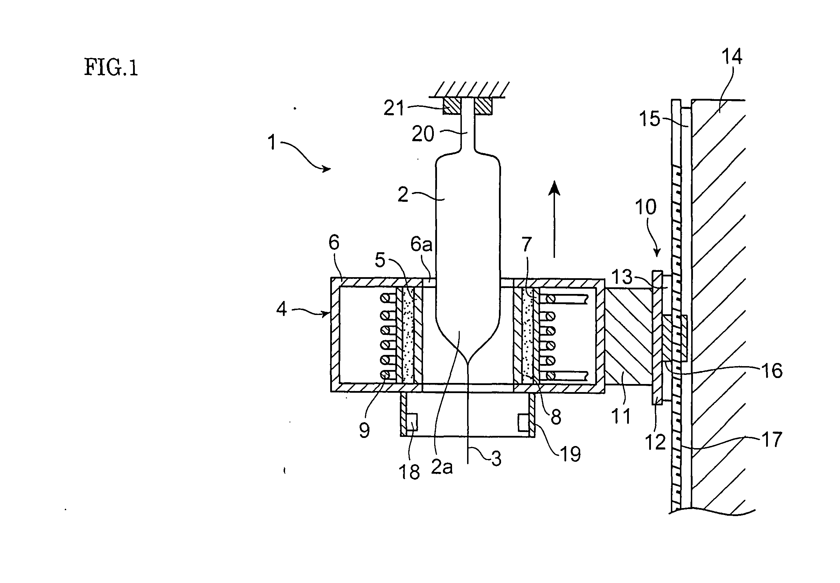

Figure 1 is a vertical cross section of an optical fiber-producing apparatus 1, which is the first embodiment of the apparatus of the present invention for producing an optical fiber. The optical fiber-producing apparatus 1 is equipped with a drawing furnace 4 for producing an optical fiber by heating and drawing an optical fiber preform 2. The drawing furnace 4 is provided with a cylindrical heating element 5 for heating and melting the optical fiber preform 2. The heating element 5 is fixed to a furnace body 6 that surrounds the heating element 5. The heating element 5 is a susceptor that is heated by high-frequency induction (hereinafter, in the first embodiment, the heating element 5 is referred to as the susceptor 5). The susceptor 5 is formed by using a ceramic material such as zirconia. A quartz tube 7 is placed around the susceptor 5. A heat insulating material 8 formed by using a granular material such as magnesia fills the clearance between the susceptor 5 and the quartz tube 7. The heat insulating material 8 may also fill the space produced by the furnace body 6 and the quartz tube 7. A coil 9 is placed around the quartz tube 7. When an electric current is supplied to the coil 9, the susceptor 5 is induction-heated.

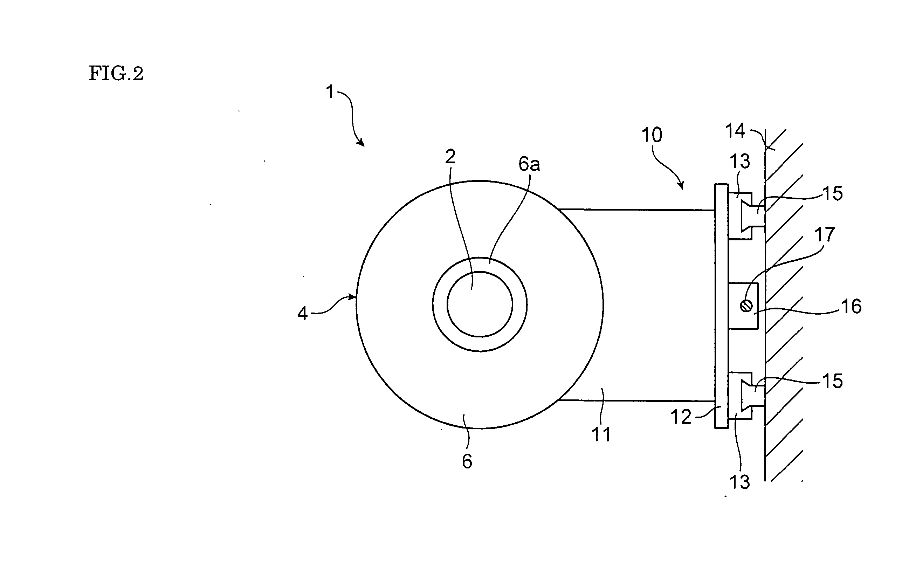

Figure 2 is a plan view of the optical fiber-producing apparatus 1 including its partial cross section. The drawing furnace 4 can be moved vertically with a moving mechanism 10. The moving mechanism 10 is provided with a supporting plate 12 that is linked to the outer peripheral surface of the furnace body 6 through a supporting member 11. Two guide arms 13 are fixed to the supporting plate 12. The two guide arms 13 can slide on two rails 15 installed vertically on the side face of a tower 14. A nut portion 16 is fixed to the supporting plate 12. A vertically long ball screw 17 is screwed into the threaded hole of the nut portion 16. When the ball screw 17 is rotated, the nut portion 16 moves vertically, moving the furnace body 6 vertically.

As described above, the susceptor 5 is formed by using a ceramic material such as zirconia, which has no tendency to oxidize. Therefore, it is not necessary to seal an opening 6a at the top side of the furnace body 6, which is the side for inserting the optical fiber preform 2. As a result, the furnace body 6 can be moved easily with the moving mechanism 10.

A diameter monitor 18 for measuring the diameter of the optical fiber 3 is fixed to the back face of the furnace body 6 through a bracket 19. Consequently, the diameter monitor 18 moves together with the furnace body 6. As a result, the diameter of the optical fiber 3 can be measured at a practically constant distance from a neck-down portion 2a of the optical fiber preform 2 (the neck-down portion 2a is a portion at which the diameter of the preform is reduced gradually to form the optical fiber). The diameter monitor 18 comprises two pairs of a light-emitting portion and a light-receiving portion, for example.

When an optical fiber is produced by using the optical fiber-producing apparatus 1, first, a preform-holding rod 20 attached to the upper end of the optical fiber preform 2 is held with a chuck portion 21. At this moment, the vertical position of the optical fiber preform 2 is adjusted as required.

Next, the ball screw 17 of the moving mechanism 10 is rotated to move the furnace body 6 upward. As shown in Fig. 1, this movement inserts the lower-end portion of the optical fiber preform 2 into the drawing furnace 4 through the opening 6a at the top side of the furnace body 6. Under this condition, an electric current is supplied to the coil 6 to heat the susceptor 5 to 2,000 °C or so. This operation heats and melts the lower-end portion of the optical fiber preform 2, so that an optical fiber 3 is drawn from the neck-down portion 2a of the optical fiber preform 2. Although not shown in the drawing, the optical fiber 3 drawn in the drawing furnace 4 is pulled with a capstan to pass through a cooler, a resin-applying section, and a resin-curing section and is finally wound with a take-up machine.

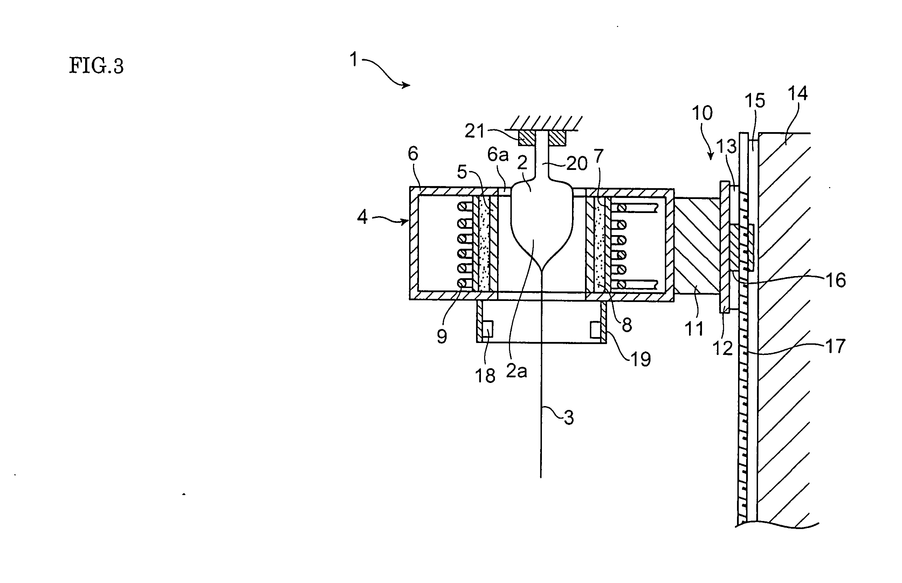

As the drawing operation proceeds, the ball screw 17 is continuously rotated to gradually move the furnace body 6 upward. The movement of the furnace body 6 can move the heat-generating portion (the heated portion of the susceptor 5). Consequently, the heated portion of the optical fiber preform 2 is gradually moved toward the upper-end portion. Thus, the drawing operation of the optical fiber 3 proceeds (see Fig. 3).

During the drawing operation, the diameter monitor 18 measures the diameter of the optical fiber 3. The pulling speed by the capstan is controlled so that the diameter of the optical fiber 3 can become an intended value. The diameter monitor 18 moves upward together with the furnace body 6. Therefore, the distance between the neck-down portion 2a of the optical fiber preform 2 and the diameter monitor 18 is maintained constant at all times. As a result, even when the furnace body 6 moves upward, the measuring accuracy of the diameter monitor is maintained constant. In other words, the diameter of the optical fiber 3 can be measured at high precision at all times.

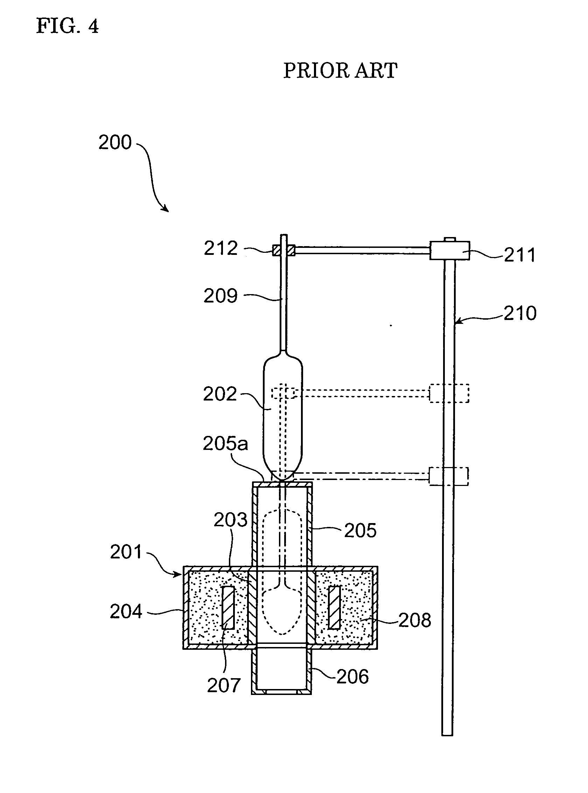

Figure 4 is a schematic diagram explaining a method of producing an optical fiber by using a conventional optical fiber-producing apparatus 200. The optical fiber-producing apparatus 200 is equipped with a drawing furnace 201. The drawing furnace 201 is provided with (a) a cylindrical muffle tube 203 into which an optical fiber preform 202 is inserted, (b) a furnace body 204 that surrounds the cylindrical muffle tube 203, (c) an upper extension portion 205 provided at the top of the furnace body 204, and (d) a lower extension portion 206 provided at the bottom of the furnace body 204. A cylindrical heating element 207 for heating the optical fiber preform 202 is placed around the cylindrical muffle tube 203. A heat-insulating material 208 fills the space between the cylindrical muffle tube 203 and the furnace body 204.

A preform-holding rod 209 longer than the vertical length of the upper extension portion 205 is attached to the top of the optical fiber preform 202. The preform-holding rod 209 is held with a chuck portion 212 provided at the tip of a feeding member 211 of a feeder 210.

When an optical fiber is produced by using the optical fiber-producing apparatus 200, first, the feeding member 211 of the feeder 210 is lowered from the assembling position shown by solid lines in Fig. 4 to insert the optical fiber preform 202 into the drawing furnace 201. The optical fiber preform 202 is lowered to a position where the heating element 203 reaches the drawing-starting position (shown by broken lines in Fig. 4), at which the heating element 203 faces the lower-end portion of the optical fiber preform 202. The top of the upper extension portion 205 is covered with a lid 205a. Under this condition, an electric current is supplied to the heating element 207 to heat it. This operation heats and melts the lower-end portion of the optical fiber preform 202, so that an optical fiber is drawn. As the drawing of the optical fiber proceeds, the optical fiber preform 202 is gradually lowered with the feeder 210.

As described above, when the optical fiber-producing apparatus 200 is used, first, the optical fiber preform 202 is lowered from the assembling position to the drawing-starting position. After the drawing operation of the optical fiber is started, the optical fiber preform 202 is further lowered from the drawing-starting position to the drawing-ending position shown by alternate long and short dashed lines in Fig. 4. This operation causes the optical fiber preform 202 to move a long distance as a total, requiring a vertically large space.

In contrast, the optical fiber-producing method of the present invention requires no downward movement of the optical fiber preform 2 during the drawing operation of the optical fiber. This system can minimize the amount of the vertical movement of the optical fiber preform, eliminating the necessity of providing a vertically large space for the drawing of the optical fiber 3.

In particular, in the first embodiment, first, the furnace body 6 of the drawing furnace 4 is moved upward while the vertical position of the optical fiber preform 2 is fixed. This operation causes the susceptor to face the lower-end portion of the optical fiber preform to render the drawing operation ready as shown in Fig. 1. In addition, as the drawing of the optical fiber 3 proceeds, the furnace body 6 is moved upward while the susceptor heats and melts the optical fiber preform. As a result, the relatively simple structure can reliably move the heat-generating portion of the susceptor toward the upper-end portion of the optical fiber preform. This structure also enables the simple control of the heating of the susceptor. Furthermore, when the optical fiber preform is brought to the drawing-starting position, only the furnace body is moved upward, without lowering the optical fiber preform. Consequently, this system further reduces the vertical space.

As a result, the vertical dimension of the tower 14 can be decreased, reducing the equipment cost. Alternatively, the space for the cooler (not shown) for cooling the optical fiber 3 may be enlarged. In this case, even when the drawing speed of the optical fiber 3 is increased, the drawn optical fiber 3 can be sufficiently cooled.

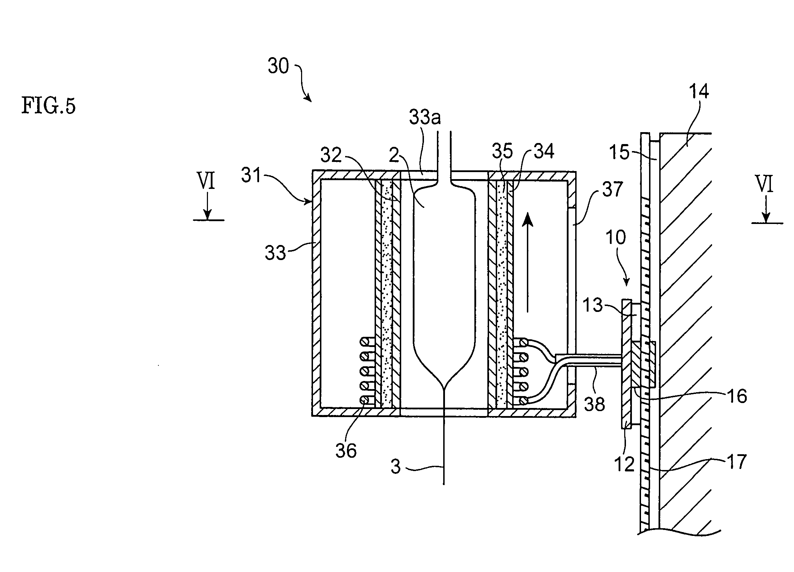

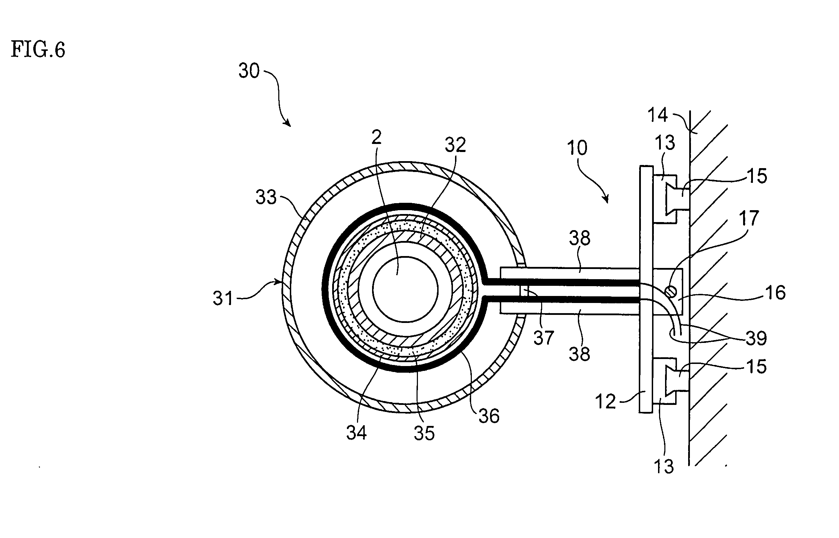

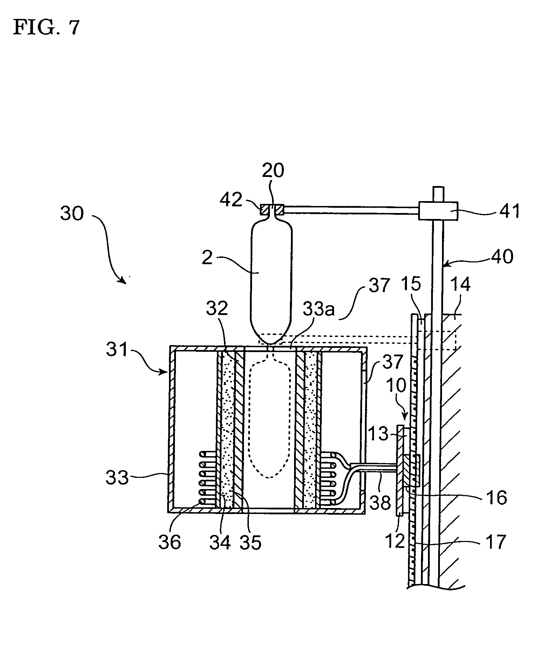

Figure 5 is a vertical cross section of an optical fiber-producing apparatus 30, which is the second embodiment of the apparatus of the present invention for producing an optical fiber. Figure 6 is a view showing the VI - VI cross section of the optical fiber-producing apparatus 30. Figure 7 is a schematic diagram explaining a method of producing an optical fiber by using the optical fiber-producing apparatus 30.

The optical fiber-producing apparatus 30 is equipped with a drawing furnace 31. The drawing furnace 31 is provided with a cylindrical heating element 32 and a furnace body 33 that surrounds the heating element 32. The heating element 32 is a susceptor that is heated by high-frequency induction (hereinafter, in the second embodiment, the heating element 32 is referred to as the susceptor 32). The susceptor 32 is formed by using a ceramic material such as zirconia. A coil 36 for generating a high-frequency electromagnetic field is placed around the susceptor 32. A quartz tube 34 is placed between the susceptor 32 and the coil 36. A heat insulating material 35 fills the clearance between the susceptor 32 and the quartz tube 34.

The furnace body 33 is provided with a vertically oriented window 37. The window 37 is formed to bring both end portions of the coil 36 to the outside of the furnace body 33 and to enable the coil 36 to move vertically in the furnace body 33.

The coil 36 is moved with a moving mechanism 10. The moving mechanism 10 is provided with a supporting plate 12 to which two supporting rods 38 are attached. The tip portions of the supporting rods 38 enter the furnace body 33 through the window 37. The end portions of the coil 36 are fixed to the supporting rods 38. Copper wires 39 are connected to the ends of the coil 36 brought to the outside of the furnace body 33.

When an optical fiber 3 is produced by using the optical fiber-producing apparatus 30, first, as shown in Fig. 7, a preform-holding rod 20 attached to the upper end of the optical fiber preform 2 is held with a chuck portion 42, which is provided at the tip of a feeding member 41 of a feeder 40. The feeding member 41 is lowered from the assembling position shown by solid lines in Fig. 7 to insert the optical fiber preform 2 into the drawing furnace 31 through the opening 33a at the top of the furnace body 33. At this initial stage, the coil 36 is positioned at the lower portion of the furnace body 33. The optical fiber preform 2 is lowered to a position where the coil 36 reaches the drawing-starting position (shown by broken lines in Fig. 7), at which the coil 36 faces the lower-end portion of the optical fiber preform 2.

Under this condition, an electric current is supplied to the coil 36 to heat the susceptor 32's lower portion corresponding to the position of the coil 36, so that the temperature of the lower portion rises to 2,000 °C or so. This operation heats and melts the lower-end portion of the optical fiber preform 2, so that an optical fiber 3 is drawn from the optical fiber preform 2.

Next, the ball screw 17 of the moving mechanism 10 is rotated to move the coil 36 in relation to the susceptor 32. This operation moves the heat-generating portion of the susceptor 32. Thus, the drawing of the optical fiber 3 proceeds.

As described above, during the drawing of the optical fiber 3, the coil 36 is moved upward while the optical fiber preform 2 is maintained stationary. Therefore, in comparison with the production of the optical fiber by using the optical fiber-producing apparatus 200, the moving distance of the optical fiber preform 2 becomes shorter. Consequently, the vertical space needed for the drawing can be decreased. Furthermore, in addition to the easy control of the heating of the susceptor, the heat-generating portion of the susceptor can be reliably moved toward the upper-end portion of the optical fiber preform.

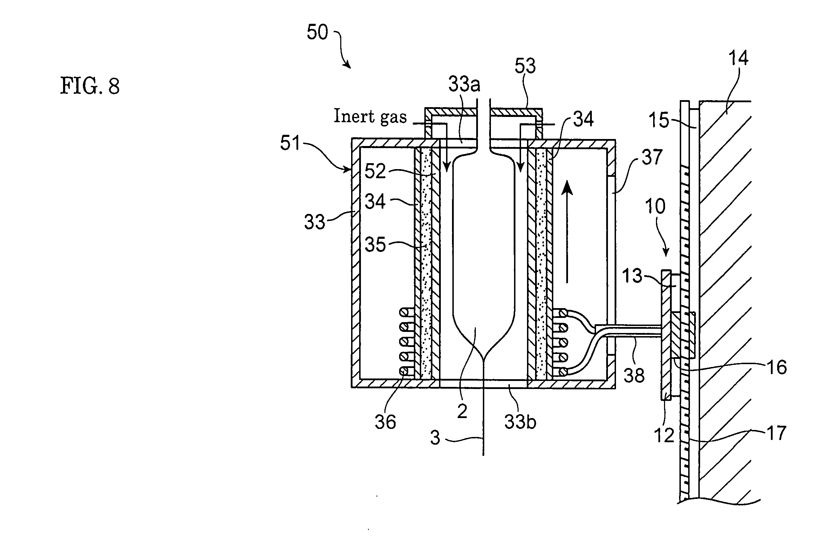

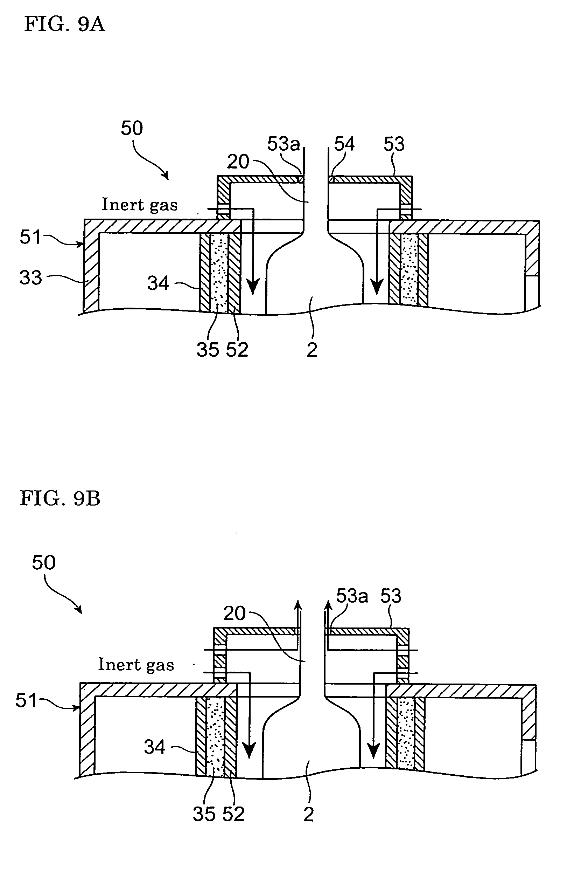

Figure 8 is a vertical cross section of an optical fiber-producing apparatus 50, which is the third embodiment of the apparatus of the present invention for producing an optical fiber. Figures 9A and 9B are schematic diagrams explaining a method of sealing an opening at the top of the furnace body of the optical fiber-producing apparatus 50.

The optical fiber-producing apparatus 50 is equipped with. a drawing furnace 51. The drawing furnace 51 is provided with a susceptor 52 formed by using graphite. A gas-supplying section 53 for supplying an inert gas such as a nitrogen or helium gas is provided at the top of the furnace body 33. The gas-supplying section 53 issues an inert gas to fill the inside of the drawing furnace 51 with an inert-gas atmosphere. The inert gas introduced into the drawing furnace 51 is discharged from an opening 33b at the bottom of the furnace body 33.

Oxygen in the outside atmosphere is prevented from entering the drawing furnace 51 through an opening 33a at the top of the furnace body 33 that surrounds the susceptor (an optical fiber preform is inserted through the opening 33a). To achieve the prevention, the opening of the gas-supplying section 53 is sealed during the drawing of the optical fiber. The prevention of oxygen in the outside atmosphere from entering the furnace body can prevent the graphite susceptor 52 from oxidizing and subsequent becoming unusable.

Figure 9A shows an example of the sealing method. A contact seal 54 is provided at an opening 53a of a gas-supplying section 53 provided at the top of the furnace body or at the upper extension portion. The contact seal 54 makes intimate contact or sliding contact with a preform-holding rod 20 attached to the top of the optical fiber preform. This contact may scratch the preform-holding rod 20. However, any damage on the surface of the preform-holding rod 20 does not cause troubles. Figure 9B shows another example. This is a gas-sealing type in which an inert gas is blown intensely to an opening 53a of a gas-supplying section 53 to prevent the outside air from entering. It is not necessary to seal an opening 33b at the bottom of the furnace body 33 because this opening only allows the inert gas in the drawing furnace 51 to exit.

Alternatively, an inert gas may be introduced by providing a gas-supplying port at the furnace body 33, without providing the gas-supplying section 53 at the top of the furnace body 33. In this case, it is necessary to directly seal the opening 33a at the top of the furnace body 33.

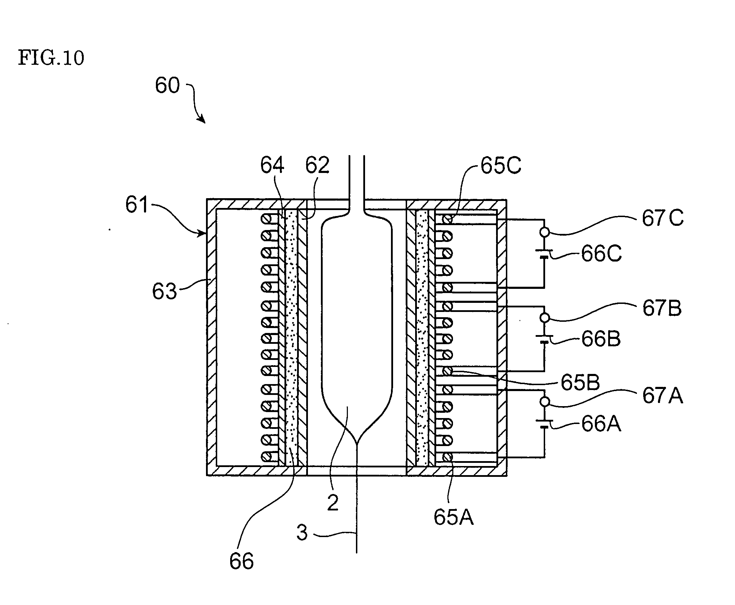

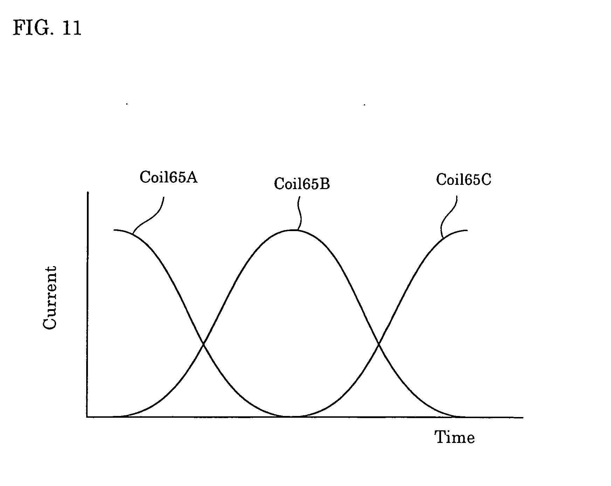

Figure 10 is a vertical cross section of an optical fiber-producing apparatus 60, which is the fourth embodiment of the apparatus of the present invention for producing an optical fiber. Figure 11 is a schematic diagram showing an example of a method of supplying electric currents to the individual coils of the optical fiber-producing apparatus 60.

The optical fiber-producing apparatus 60 is equipped with a drawing furnace 61. The drawing furnace 61 is provided with a cylindrical heating element 62 and a furnace body 63 that surrounds the heating element 62. The heating element 62 is a susceptor that is heated by high-frequency induction (hereinafter, in the fourth embodiment, the heating element 62 is referred to as the susceptor 62). The susceptor 62 is formed by using a ceramic material such as zirconia. A plurality of coils 65A to 65C for generating a high-frequency electromagnetic field are vertically aligned around the susceptor 62. A quartz tube 64 is placed between the susceptor 62 and the coils 65A to 65C. A heat insulating material 66 fills the clearance between the susceptor 62 and the quartz tube 64. The heat insulating material 66 may also fill the space produced by the furnace body 63 and the quartz tube 64. Electric currents are supplied to the coils 65A to 65C from power sources 66A to 66C through current-adjusting means 67A to 67C, respectively (the current-adjusting means comprises a variable resistor, a selection switch, and a thyristor).

The susceptor 62 may also be formed by using graphite. In this case, as in the third embodiment, the susceptor 62 must be prevented from oxidizing by employing a sealing means or another means.

When an optical fiber is produced by using the optical fiber-producing apparatus 60, first, as shown in Fig. 10, an optical fiber preform 2 is inserted into the drawing furnace 61. Under this condition, an electric current is supplied to the lowermost coil 65A from the power source 66A after the current is adjusted with the current-adjusting means 67A. This current supply heats the susceptor 62's lower portion corresponding to the position of the coil 65A. This operation heats and melts the lower-end portion of the optical fiber preform 2, so that an optical fiber 3 is drawn from the optical fiber preform 2.

Next, as the drawing operation proceeds, an electric current is supplied to the middle-positioned coil 65B from the power source 66B after the current is adjusted with the current-adjusting means 67B. This current supply heats the susceptor 62's middle portion corresponding to the position of the coil 65B. Concurrently, the current supply to the coil 65A is stopped. Next, as the drawing operation further proceeds, an electric current is supplied to the uppermost coil 65C from the power source 66C after the current is adjusted with the current-adjusting means 67C. This current supply heats the susceptor 62's upper portion corresponding to the position of the coil 65C. Concurrently, the current supply to the coil 65B is stopped. Thus, the drawing of the optical fiber 3 proceeds.

As described above, the current supply is switched from one of the coils 65A to 65C to another to move a heat-generating portion of the susceptor 62 toward the upper-end portion of the optical fiber preform 2. In this case, it is desirable to switch the current supply from one coil to another by varying the current for supplying to the coils 65A to 65C on an analog basis. For example, as shown in Fig. 11, while the current for supplying to the coil 65A is decreased, the current for supplying to the coil 65B is increased. Subsequently, while the current for supplying to the coil 65B is decreased, the current for supplying to the coil 65C is increased. This operation enables the drawing with maintaining the diameter of the optical fiber 3 constant.

The fourth embodiment eliminates the necessity of providing the moving mechanism for moving the furnace body 63 or the coils 65A to 65C upward. Consequently, the structure of the optical fiber-producing apparatus can be simplified, thereby reducing the cost of the apparatus. In addition, the heat-generating portion of the susceptor can be reliably moved toward the upper-end portion of the optical fiber preform.

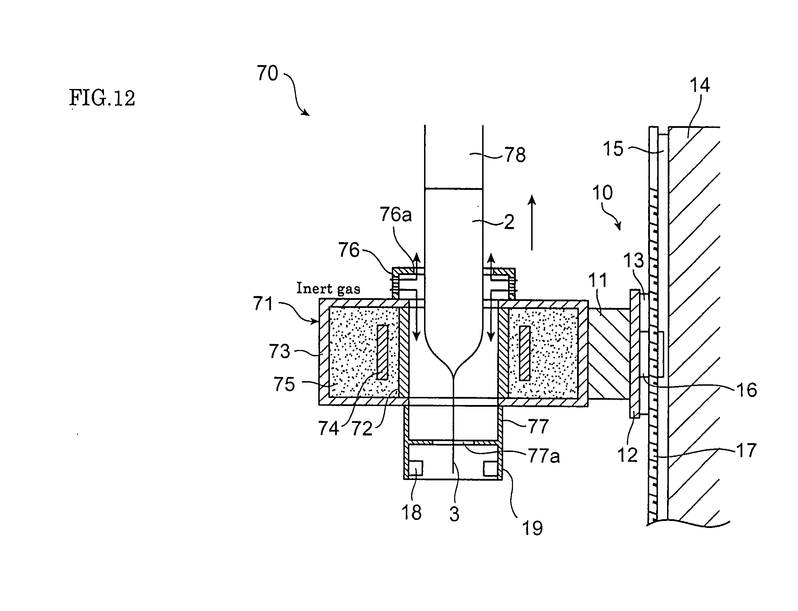

Figure 12 is a vertical cross section of an optical fiber-producing apparatus 70, which is the fifth embodiment of the apparatus of the present invention for producing an optical fiber. The optical fiber-producing apparatus 70 is equipped with a drawing furnace 71. The drawing furnace 71 is provided with a cylindrical muffle tube 72, into which an optical fiber preform 2 is inserted, and a furnace body 73 that surrounds the cylindrical muffle tube 72. A heating element 74 is placed around the cylindrical muffle tube 72. The heating element 74 is a resistance-type heater, which generates heat when an electric current is supplied. The cylindrical muffle tube 72 and the heating element 74 are made of a material such as graphite or silicon carbide. A heat-insulating material 75 fills the space between the cylindrical muffle tube 72 and the furnace body 73. The furnace body 73 can be moved vertically with a moving mechanism 10.

A gas-supplying section 76 for supplying an inert gas is provided at the top of the furnace body 73. The gas-supplying section 73 fills the inside of the drawing furnace 71 with an inert-gas atmosphere. An opening 76a of the gas-supplying section 76 is gas-sealed with an inert gas. Thus, the cylindrical muffle tube 72 and the heating element 74 can be prevented from oxidizing.

A lower extension portion 77 is provided at the bottom of the furnace body 73. The inert gas in the drawing furnace 71 is discharged from an opening 77a at the lower extension portion 77. A diameter monitor 18 is attached to the back face of the lower extension portion 77 through a bracket 19.

When an optical fiber is produced by using the optical fiber-producing apparatus 70, first, a preform-holding rod 78 having practically the same diameter as that of the optical fiber preform 2 is jointed to the top of the optical fiber preform 2. The preform-holding rod 78 is held with a chuck portion (not shown). Under this condition, the drawing furnace 71 is moved upward with the moving mechanism 10 to perform the drawing.

If the diameter of the preform-holding rod jointed to the top of the optical fiber preform 2 is small, the area of the opening 76a is increased just before the end of the drawing operation. As a result, the opening 76a cannot be sufficiently gas-sealed, producing a possibility of allowing oxygen in the outside air to enter the drawing furnace 71. On the other hand, the preform-holding rod 78 having the same diameter as that of the optical fiber preform 2 enables the maintenance of the sufficient gas seal even just before the end of the drawing operation. This structure is particularly useful for a gas-sealing system in which an intense gas stream is blown to an opening at the top of the furnace body to prevent oxygen in the outside air from entering the furnace body when the heating element is formed with a material such as graphite.

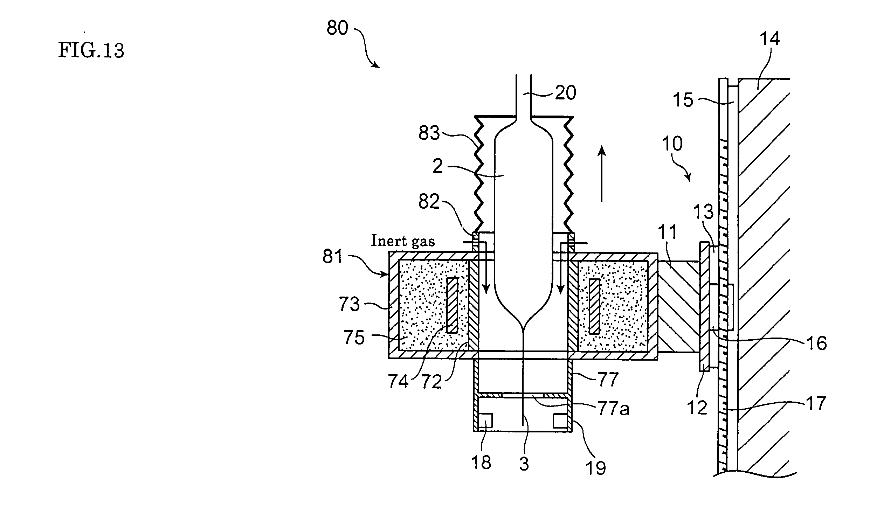

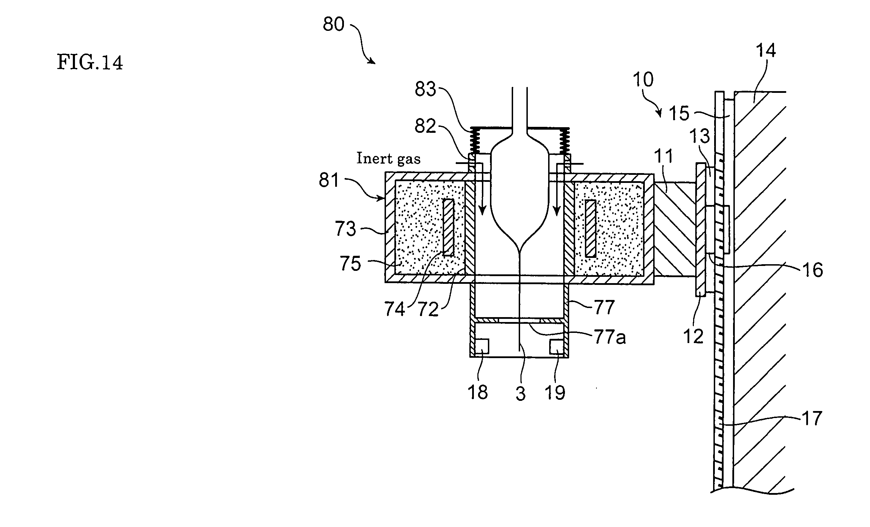

Figure 13 is a vertical cross section of an optical fiber-producing apparatus 80, which is the sixth embodiment of the apparatus of the present invention for producing an optical fiber. Figure 14 is a diagram showing the optical fiber-producing apparatus 80 when the drawing operation has proceeded to a certain extent.

The optical fiber-producing apparatus 80 is equipped with a drawing furnace 81. The drawing furnace 81 is provided with the same cylindrical muffle tube 72, furnace body 73, and heating element 74 as used in the drawing furnace 71. A framework-shaped gas-supplying section 82 for supplying an inert gas is provided at the top of the furnace body 73. The top of the gas-supplying section 82 is linked to the bottom of an expansion member (bellows) 83. The opening of the bellows 83 is provided with a contact seal or another sealing means in relation to the preform-holding rod 20 to prevent oxygen from entering the drawing furnace 81. Before the movement of the furnace body 73, the upper portion of the optical fiber preform 2 is covered with the bellows 83 linked to the top portion of the furnace body 73.

In the drawing furnace 81, when the furnace body 73 is at the drawing-starting position as shown in Fig. 13, the bellows 83 is expanded. Next, when the ball screw 17 of the moving mechanism 10 is rotated, as shown in Fig. 14, the furnace body 73 moves upward, contracting the bellows 83. Therefore, even when the diameter of the preform-holding rod 20 attached to the top of the optical fiber preform 2 is smaller than that of the preform 2, the furnace body 73 can be easily moved upward without allowing oxygen in the outside air to enter the drawing furnace 81. The sixth embodiment is particularly suitable when the heating element is made of a material such as graphite.

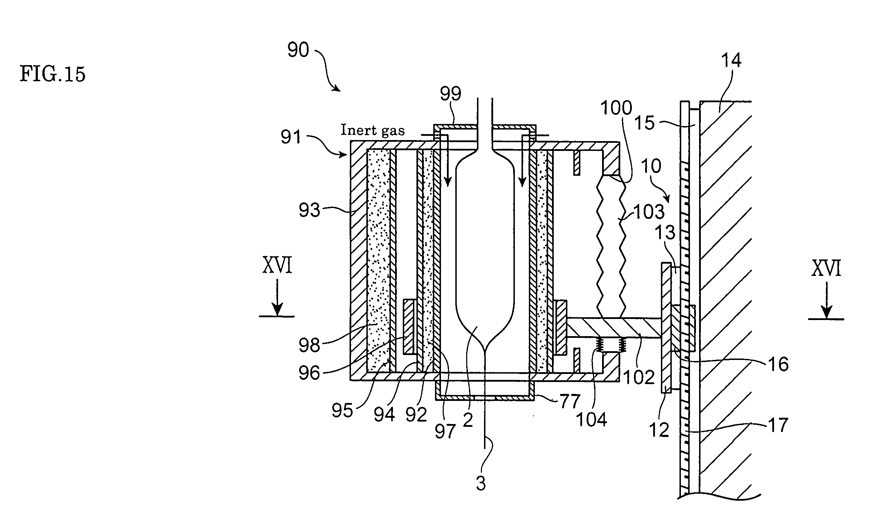

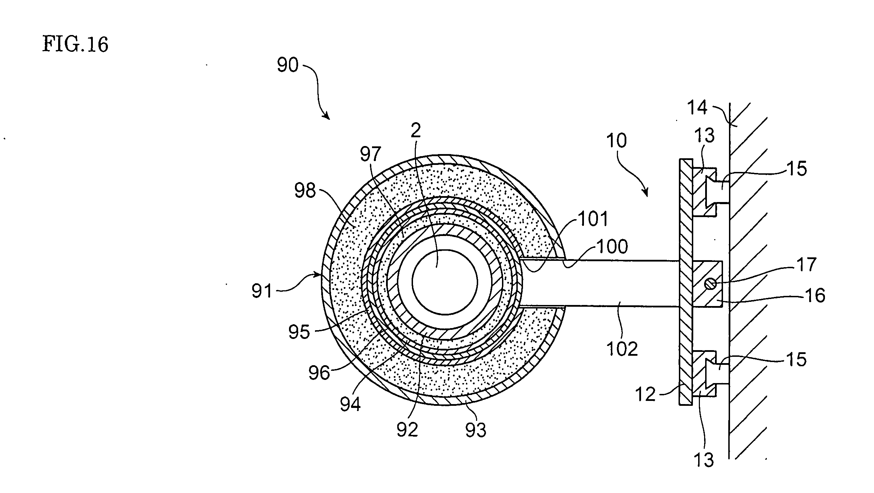

Figure 15 is a vertical cross section of an optical fiber-producing apparatus 90, which is the seventh embodiment of the apparatus of the present invention for producing an optical fiber. Figure 16 is a view showing the XVI - XVI cross section of the optical fiber-producing apparatus 90.

The optical fiber-producing apparatus 90 is equipped with a drawing furnace 91. The drawing furnace 91 is provided with a cylindrical muffle tube 92 and a furnace body 93 that surrounds the cylindrical muffle tube 92. An inner quartz tube 94 and an outer quartz tube 95 are placed around the cylindrical muffle tube 92. A heating element 96 is placed between the quartz tubes 94 and 95. The cylindrical muffle tube 92 and the heating element 96 are made of a material such as graphite or silicon carbide. A heat-insulating material 97 fills the space between the cylindrical muffle tube 92 and the inner quartz tube 94. A heat-insulating material 98 fills the space produced by the furnace body 93 and the outer quartz tube 95. A gas-supplying section 99 for supplying an inert gas is provided at the top of the furnace body 93.

The furnace body 93 is provided with a vertically oriented window 100. The quartz tube 95 is provided with a vertically oriented window 101 at a position opposite to the position of the window 100 of the furnace body 93. The windows 100 and 101 are formed to provide a space for placing a supporting member 102 that links the heating element 96 to the supporting plate 12 of the moving mechanism 10. This structure allows the moving mechanism 10 to move the heating element 96 vertically.

Bellows 103 and 104 are provided between the supporting member 102 and the furnace body 93 to seal the window 100. This structure can prevent oxygen in the atmosphere from entering the furnace body 93 through the window 100, thereby preventing the oxidation of the heating element 96.

In the optical fiber-producing apparatus 90, when the heating element 96 is at the drawing-starting position as shown in Fig. 15, the upper bellows 103 is expanded and the lower bellows 104 is contracted. Next, when the heating element 96 moves upward as the drawing of the optical fiber 3 proceeds, the upper bellows 103 contracts gradually and the lower bellows 104 expands gradually.

This embodiment has a structure in which the heating element 96 is moved vertically. Alternatively, a plurality of heating elements may be aligned vertically so that the current supply can be switched from a lower heating element to an upper heating element. In this case, it is not necessary to provide the inner quartz tube 94 and the outer quartz tube 95 and to form the window 100 in the furnace body 93.

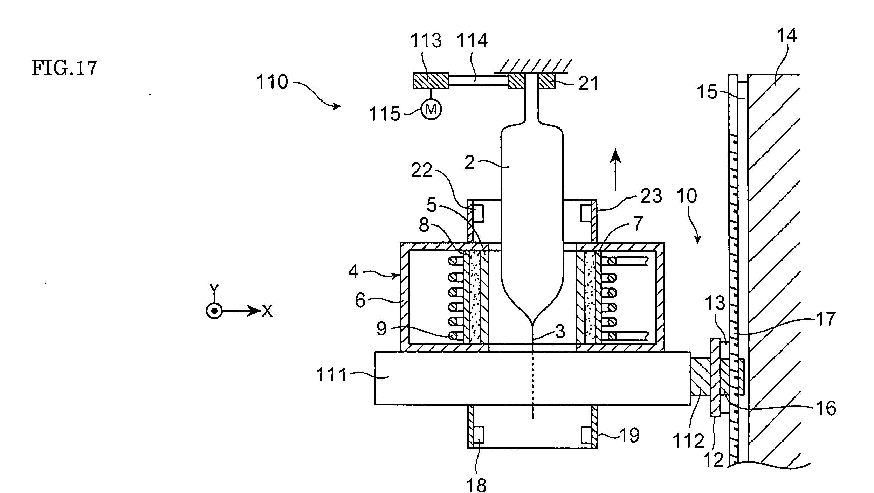

Figure 17 is a vertical cross section of an optical fiber-producing apparatus 110, which is the eighth embodiment of the apparatus of the present invention for producing an optical fiber. The optical fiber-producing apparatus 110 is equipped with a drawing furnace 4. The drawing furnace 4 is mounted on an XY-stage 111. The XY-stage 111 moves the drawing furnace 4 in directions perpendicular to the center axis of the optical fiber preform 2 (X and Y directions shown in Fig. 17).

The XY-stage 111 is linked to the supporting plate 12 of the moving mechanism 10 through the supporting member 112. Consequently, when the ball screw 17 of the moving mechanism 10 is rotated, the furnace body 4 moves upward together with the XY-stage 111. Two pairs of diameter monitors 22 having mutually perpendicular optical axes are attached to the top surface of the furnace body 6 through a bracket 23.

A chuck portion 21 for holding the optical fiber preform 2 and a pulley 113 placed at a predetermined position are connected with each other with a gearing belt 114. When a motor 115 is driven, the pulley 113 is rotated. The rotation is transmitted to the chuck portion 21 through the gearing belt 114. The rotation of the chuck portion 21 rotates the optical fiber preform 2 on its own axis.

When an optical fiber is produced by using the optical fiber-producing apparatus 110, first, the drawing furnace 4 is raised to the drawing-starting position as shown in Fig. 17. Then, before the drawing of the optical fiber preform 2, the heating element 5 is moved with the XY-stage 111 so that the center axis of the heating element and that of the optical fiber preform can be coincident with each other (hereinafter, in the eighth embodiment, the heating element 5 is referred to as the susceptor 5). More specifically, the position of the optical fiber preform 2 measured by the two pairs of the diameter monitors 22 and the predetermined position of the susceptor 5 are compared. If they are not coincident, the susceptor 5 is moved together with the drawing furnace 4 to achieve the coincidence of the two center axes.

During the drawing of the optical fiber preform 2, the position of the drawn optical fiber 3 may be measured with two pairs of diameter monitors 18, whose optical axes are perpendicular to each other. If the optical fiber 3 does not run at the center of the cylindrical muffle tube, the XY-stage 111 is moved so that the center axes of the cylindrical muffle tube and the optical fiber 3 is coincident with each other. By this method the axis of the optical fiber preform 2 and that of the heating element 5 can be coincident with each other.

The coincidence between the center axes of the optical fiber preform 2 and the susceptor 5 prevents the cross-sectional shape of the preform 2 from becoming noncircular (elliptic) when the preform 2 is heated and melted. In the above description, the expression "cross-sectional shape" means the shape of the cross section perpendicular to the center axis of the optical fiber preform 2.

Furthermore, the optical fiber 3 is produced while the optical fiber preform 2 is rotated on its own axis with the motor 115. This rotation enables the peripherally uniform heating of the preform 2. Consequently, this rotation can more reliably prevent the cross-sectional shape of the preform 2 from becoming noncircular when it is heated and melted.

As a result, the cross-sectional shape of the drawn optical fiber 3 can also be prevented from becoming noncircular. Consequently, the optical fiber 3 thus obtained has a good polarization mode dispersion (PMD), and the use of this optical fiber 3 enables easy long-haul transmission.

This embodiment has a structure in which the XY-stage 111 moves the drawing furnace 4 in directions perpendicular to the center axis of the optical fiber preform 2. Alternatively, the chuck portion 21 may be attached to an XY-stage so that it can be moved. This structure allows the optical fiber preform 2 to move in the same directions as above.

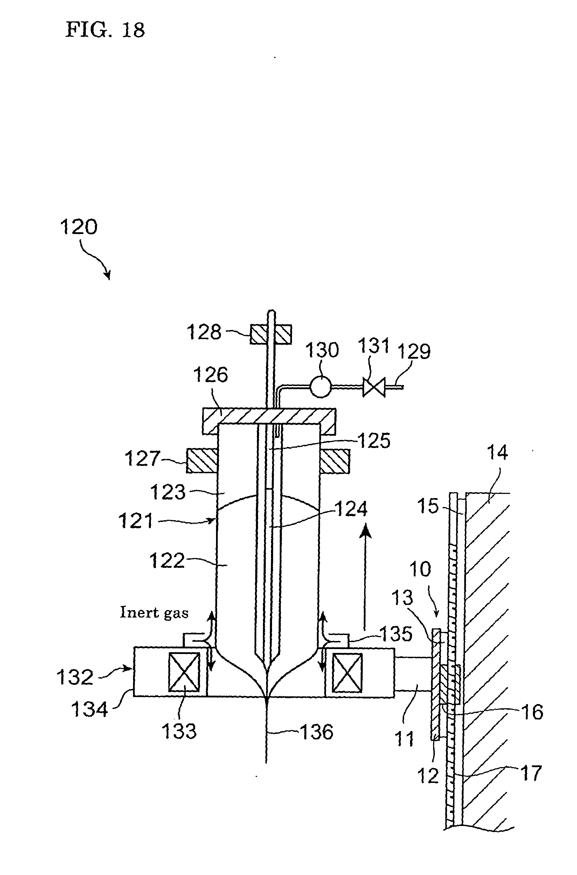

Figure 18 is a vertical cross section of an optical fiber-producing apparatus 120, which is the ninth embodiment of the apparatus of the present invention for producing an optical fiber. The optical fiber-producing apparatus 120 performs rod-in-tube drawing. The optical fiber preform 121 to be used in the rod-in-tube drawing comprises a glass tube 122 having a dummy tube 123 fusion-bonded to its top surface. A core rod 124 is inserted into the glass tube 122. A dummy rod 125 is fusion-bonded to the top surface of the core rod 124. The top of the dummy tube 123 is sealed with a lid 126. The dummy rod 125 is sealed against the lid 126 without leaving a gap.

The optical fiber-producing apparatus 120 is provided with (a) a chuck portion 127 for holding the dummy tube 123, (b) a chuck portion 128 for holding the dummy rod 125, and (c) a piping 129 for discharging the gas existing in the clearance between the core rod 124 and the glass tube 122 (the pressure inside the glass tube 122 is reduced). A pressure gauge 130 and a valve 131 are connected to the piping 129. The piping 129 is sealed against the lid 126 without leaving a gap.

The optical fiber-producing apparatus 120 is equipped with a drawing furnace 132. The drawing furnace 132 is provided with a heating element 133, which heats the glass pipe 122, and a furnace body 134 that surrounds the heating element 133. The furnace body 134 can be moved vertically with the above-described moving mechanism 10. A gas-supplying section 135 for supplying an inert gas is provided at the top of the furnace body 134.

In the optical fiber-producing apparatus 120, when the heating element 133 generates heat, the glass tube 122 and the core rod 124 are heated and melted concurrently, enabling the drawing of the optical fiber 136. As the drawing proceeds, the drawing furnace 132 is moved upward gradually.

As described above, during the drawing of the optical fiber 136, the drawing furnace 132 is moved while the optical fiber preform 121 is maintained stationary. Therefore, the piping 129 can be stationary. As a result, the equipment can be simplified, reducing the cost.

The ninth embodiment has a structure in which the furnace body 134 of the drawing furnace 132 is moved vertically. Alternatively, the heating element 133 may be moved vertically. Yet alternatively, a plurality of heating elements 133 may be aligned vertically so that the current supply can be switched from a lower heating element 133 to an upper heating element 133.

The present invention is not limited to the above-described embodiments. For example, in the drawing furnace 4 comprising the susceptor 5, the vertically moving furnace body 6, and the coil 9 as shown in Fig. 1, the susceptor 5 may also be made of a material such as graphite. In this case, it is necessary to employ one of the following designs:
(a) As shown in Fig. 12, the opening 6a at the top of the furnace body 6 is gas-sealed and the preform-holding rod provided at the top of the optical fiber preform 2 is caused to have the same diameter as that of the preform 2.
(b) As shown in Fig. 13, a bellows is provided at the top of the furnace body 6.

The present invention is described above in connection with what is presently considered to be the most practical and preferred embodiments. However, the invention is not limited to the disclosed embodiments, but, on the contrary, is intended to cover various modifications and equivalent arrangements.

The entire disclosure of Japanese patent application 2003-338066 filed on September 29, 2003 including the specification, claims, drawing, and summary is incorporated herein by reference in its entirety.

## Claims

1. A method of producing an optical fiber by heating a lower-end portion of an optical fiber preform with a heating element so that the optical fiber preform can be drawn, wherein the optical fiber preform is drawn by moving a heat-generating portion of the heating element from the lower-end portion toward an upper-end portion of the optical fiber preform.

2. A method of producing an optical fiber as defined by claim 1, wherein:
(a) the heating element is fixed to a furnace body that surrounds the heating element; and
(b) the heat-generating portion is moved by moving the furnace body.

3. A method of producing an optical fiber as defined by claim 2, wherein the heating element is a susceptor that is heated by high-frequency induction.

4. A method of producing an optical fiber as defined by any one of claims 2 and 3, wherein:
(a) a diameter monitor is fixed to the furnace body; and
(b) the diameter monitor, which accordingly moves together with the furnace body, measures the diameter of the optical fiber at a practically constant distance from a neck-down portion of the optical fiber preform.

5. A method of producing an optical fiber as defined by any one of claims 2 to 4, wherein a preform-holding rod having practically the same diameter as that of the optical fiber preform is jointed to the top of the optical fiber preform.

6. A method of producing an optical fiber as defined by any one of claims 2 to 4, wherein before the movement of the furnace body, the upper portion of the optical fiber preform is covered with an expansion member linked to the top portion of the furnace body.

7. A method of producing an optical fiber as defined by claim 1, wherein:
(a) the heating element is a susceptor that is heated by high-frequency induction;
(b) a coil for generating a high-frequency electromagnetic field is placed around the susceptor; and
(c) the coil is moved in relation to the susceptor to move a heat-generating portion of the susceptor.

8. A method of producing an optical fiber as defined by claim 1, wherein:
(a) the heating element is a susceptor that is heated by high-frequency induction;
(b) a plurality of coils for generating a high-frequency electromagnetic field are vertically aligned around the susceptor; and
(c) the supplying of an electric current is switched from one of the coils to another to move a heat-generating portion of the susceptor.

9. A method of producing an optical fiber as defined by any one of claims 1 to 8, wherein the optical fiber preform is drawn by moving one of the heating element and the optical fiber preform at any time from the beginning of the preparation work to the end of the drawing operation so that the center axis of the heating element and the center axis of the optical fiber preform can be coincident with each other.

10. An apparatus for producing an optical fiber by heating a lower-end portion of an optical fiber preform with a heating element so that the optical fiber preform can be drawn, the apparatus comprising a moving mechanism for moving a heat-generating portion of the heating element from the lower-end portion toward an upper-end portion of the optical fiber preform.

11. An apparatus for producing an optical fiber as defined by claim 10, wherein:
(a) the heating element is fixed to a furnace body that surrounds the heating element; and
(b) the moving mechanism moves the furnace body.

12. An apparatus for producing an optical fiber as defined by claim 10, wherein:
(a) the heating element is a susceptor that is heated by high-frequency induction;
(b) a coil for generating a high-frequency electromagnetic field is placed around the susceptor; and
(c) the moving mechanism moves the coil in relation to the susceptor.

13. An apparatus for producing an optical fiber as defined by claim 10, wherein:
(a) the heating element is a susceptor that is heated by high-frequency induction;
(b) a plurality of coils for generating a high-frequency electromagnetic field are vertically aligned around the susceptor; and
(c) the moving mechanism adjusts electric currents to be supplied to the coils.
